# EUROPEAN PATENT SPECIFICATION

(11) **EP 2 114 221 B1**
(45) Date of publication and mention of the grant of the patent: **05.05.2010**
(21) Application number: 07847194.3
(22) Date of filing: 16.11.2007
(51) Int. Cl.: A47J 37/07, A21B 3/15

(54) **COOKING DEVICE FOR BARBEQUE**
GRILL-GARVORRICHTUNG
DISPOSITIF DE CUISSON POUR BARBECUE

(43) Date of publication of application: 11.11.2009
(73) Proprietor: Bergen, Johan, 3271 Averbode (BE)
(72) Inventor: Bergen, Johan, 3271 Averbode (BE)
(74) Representative: Bird, William Edward
(86) International application number: PCT/EP2007/062467
(87) International publication number: WO 2009/062555

(56) References cited:
- WO-A-00/69316
- DE-A1- 10 007 338
- DE-U1- 20 314 981
- GB-A- 2 432 509
- US-A- 5 232 609
- US-A- 5 970 856
- US-A1- 2005 145 623

## Description

### Technical field of the invention

The present invention relates to the field of cooking devices. More particularly, the present invention relates to the field of cooking devices for use in barbeque applications.

### Background of the invention

The use of cooking trays is well known in conventional cooking ovens. These cooking trays may be made from metal, glass or even other materials such as glass fibres, as described in more detail in GB 2432509 and WO 2005/065457.

Whereas in a conventional oven there is a highly controllable maximum temperature and temperature profile, the latter is not the case in barbeque systems. The highly uncontrollable temperature in barbeque systems, which in combination with open flame systems often leads to burning of food, has lead to the use of metal trays for cooking.

One cooking device used to cope with the uncontrollable temperature profile is illustrated in WO 00/69316, describing a device for baking food items such as pizza on a barbeque. The device comprises a base plate with louvered openings, upstanding walls extending from the base plate, and a baking plate on top of the upstanding wall where the food is to be prepared. The specific metal construction allows for obtaining a controllable and uniform heat under the baking plate.

Numerous cooking trays for barbeques have been developed for coping with the uncontrollable temperature profile, burning of food and formation of dirt on the wire grill. One example thereof is given in US 4,969,449, describing the use of a corrugated and perforated sheet of heavy duty aluminium foil. The corrugations allow smoke to access the bottom surface of the food being cooked and the troughs provided allow fat from the food being cooked to drip onto the heat source, resulting in the generation of the smoke and flames which give the food the desired barbeque flavour. By adjusting the distance between the different troughs, it furthermore can be prevented that the fat sticks to the wire grill, thus preventing the wire grill from getting dirty.

The different cooking trays used for barbeque applications are made of metal, which has the disadvantage that these get hot during use and may have sharp edges, both leading to the possibility of the user getting injured. Furthermore these metal trays often are disposable and can only be used once. Metal trays used during a plurality of cooking sessions often change in colour or shape already after first use. Furthermore, food and grease may stick to the metal trays resulting in the need for labour-intensive cleaning.

### Summary of the invention

It is an object of embodiments of the present invention to provide good cooking trays for barbeque applications, use of such cooking trays and methods for preparing food. It is an advantage of embodiments according to the present invention that cooking trays for barbeque applications are provided which can be re-used. It is an advantage of embodiments according to the present invention that cooking trays for barbeque applications are provided which can be easily cleaned, e.g. in a dishwasher. It is an advantage of embodiments according to the present invention that cooking trays for barbeque applications are provided which avoid that parts of food drop between the grids of the wire grill, e.g. for food like fish or vegetables that easily break into pieces when turned. It is an advantage of embodiments according to the present invention that good cooking trays for barbeque applications are provided that reduce the risk of burning or injuring of the user during manipulation of the cooking tray. It is an advantage of embodiments according to the present invention that the food cannot stick to the wire grill of the barbeque system. It is an advantage of embodiments according to the present invention that risk of sticking of the food to the cooking tray is reduced or even avoided. It is an advantage of embodiments according to the present invention that the shape and look of the cooking tray does not significantly deteriorate when the cooking tray is re-used for a number of times.

It is an advantage of embodiments according to the present invention that cooking trays for barbeque applications are provided that significantly reduce that the wire grill of the barbeque gets dirty, e.g. compared with baking of food directly on the wire grill.

The above objective is accomplished by a method and device according to the present invention.

The present invention relates to a cooking tray for preparing food on a barbeque system comprising a heat source and a wire grill, the cooking tray being adapted for being positioned on said wire grill of said barbeque when in operation and the cooking tray having at least a base portion comprising a glass fibre based mesh or grating for supporting food to be prepared on said barbeque system. It has surprisingly be found that cooking trays comprising a glass fibre based mesh for supporting food can be used for preparing food on a barbeque system, despite the strong temperature fluctuations and incontrollable temperature profile obtained in the barbeque system.

The glass fibre based mesh or grating may be coated with an anti-sticking material. The anti-sticking material may be a fluoropolymer. The fluoropolymer may be any of a polytetrafluoroethylene (PTFE), fluorinated ethylene propylene (FEP) or perfluoroalkoxy (PFA).

The cooking tray may comprise upstanding side walls attached to the base portion to prevent food from rolling or dropping off of the cooking tray.

The cooking tray may comprise manipulation means for assisting in the manipulation of the cooking tray. The manipulation means may comprise handles for displacing the cooking tray. Displacing the cooking tray may be positioning the cooking tray on the wire grill or removing the cooking tray of the wire grill. It is an advantage of embodiments according to the present invention that the cooking tray can be easily manipulated. The handles may be suitable for manually handling the cooking tray or for handling the cooking tray with an additional tray manipulation device. The manipulation means comprises engagement means for engaging the cooking tray to the wire grill. It is an advantage of embodiments according to the present invention that the cooking tray can be fixed to the wire grill, preventing the cooking tray from shifting of the wire grill during manipulation of the wire grill, e.g. during change of height of the wire grill with respect to the heat source.

The mesh or grating may be a mesh made by warp knitting, braiding or weaving. The mesh may be a woven mesh. The woven mesh may be made by leno weaving.

The mesh or grating may have mesh openings allowing air circulation. The mesh openings may have a surface between 2 x 2 mm² and 6 x 6 mm². The density of the grating or mesh may be between 200g and 1200g/m².

The present invention also relates to the use of a cooking tray for preparing food on a barbeque system according to claim 12.

The present invention furthermore relates to a method for preparing food using a barbeque system, the method comprising providing a heat source in the barbeque system, providing a wire grill above the heat source, providing food on a cooking tray for preparing the food and positioning the cooking tray on the wire grill, the cooking tray having a base portion comprising a glass fibre based mesh.

Particular and preferred aspects of the invention are set out in the accompanying independent and dependent claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1 is an exemplary and schematic representation of a barbeque system as can be used in combination with a cooking tray according to embodiments of the present invention.
FIG. 2 is an example of a wire grill of a barbeque system whereon a cooking tray according to an embodiment of the present invention is positioned.
FIG. 3 is a schematic representation of a first example of a cooking tray according to an embodiment of the present invention.
FIG. 4 is a schematic representation of a top view of a cooking tray with upstanding side walls according to an embodiment of the present invention.
FIG. 5 is a schematic representation of a cooking tray with support portions according to an embodiment of the present invention.
FIG. 6 is a schematic representation of a cooking tray with engagement means according to an embodiment of the present invention.
FIG. 7 is a schematic representation of a cooking tray with handling means according to an embodiment of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention. Where in the present application reference is made to "barbeque" or "barbeque system" any type of cooking device having a heat source with flames and a wire grill positioned above the heat source for preparing the food is envisaged, independent of the shape, model, colour or size. The barbeque system may be operated on charcoal or gas or any type of fuel that allows to have a heat source with flames. Examples of a barbeque system, the present invention not being limited thereto, are backyard barbeques, portable barbeques, displaceable barbeques, etc.

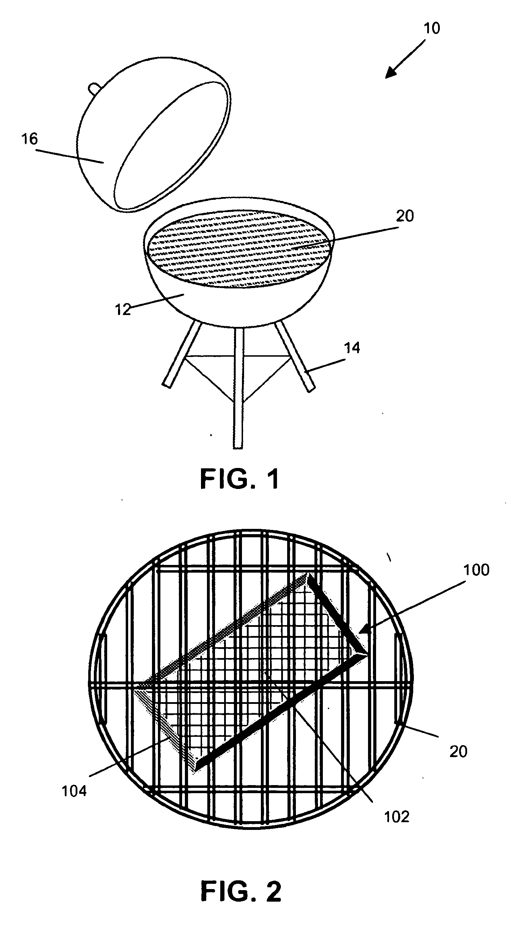

Embodiments of the present invention will be used in combination with a barbeque system. By way of illustration, the present invention not being limited thereto, an example of a barbeque system is shown in FIG. 1. The barbeque system 10 may have a housing 12 with a bottom part where the heat source can be provided. The heat source may for example be charcoals or gas, or any other heat source resulting in an open flame. The barbeque system 10 further may have upstanding walls which provide at one or more heights support for a wire grill 20. The wire grill 20 is a metal grid that can be positioned above the heat source and that can support the food to be cooked. The barbeque system 10 furthermore may comprise a support 14 for carrying the housing, a lid 16 for closing the cooking space, an ignition system (not shown) for initiating the heat production with the heat source. Furthermore, support tables, handling means, wheels for displacing the barbeque system etc. may also optionally be provided.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims. By way of illustration, the present invention not being limited thereto, a number of exemplary cooking trays according to embodiments of the present invention is shown in FIG. 2 to FIG. 7.

In a first aspect, the present invention relates to a cooking tray 100 for grilling food on a barbeque system 10. The cooking tray 100 is adapted for use with a barbeque system 10 and can be positioned on the barbeque wire grill 20. The cooking tray 100 is adapted for being positioned on the wire grill of the barbeque, also when the barbeque is in operation. The cooking tray may be adapted for operation at temperatures between 0°C and 280°C or higher, e.g. for a baking or grilling process at temperatures between 150° and 280°C or higher. It furthermore is an advantage of embodiments according to the present invention that the cooking tray can be used for preparing food whereby temperature peaks up to 400°C may occur. It is also an advantage of embodiments according to the present invention that the cooking tray 100 is resistant to short exposures to flames, i.e. the cooking tray is to some degree flame resistant. The cooking tray 100 comprises at least a base portion comprising a glass fibre based mesh or grating 102 for supporting the food to be prepared on the barbeque system 10. It has surprisingly been found that these glass fibre based cooking trays 100 can be used in barbeque systems 10, although it is known that strong temperature fluctuations and an incontrollable temperature profile is inherently present in barbeque systems 10. The cooking tray 100 could be used for any type of food, such as for example, meat, fish, vegetables, etc. The cooking tray 100 advantageously is made of a food grade material and may be conform hygienic standards such as for example the FDA standard or the European standard regarding food preparation.

The cooking tray 100 may be a flat cooking tray or may be a three-dimensional cooking tray. In one embodiment, the cooking tray 100 is provided with side walls 104 extending from the bottom portion. Such side walls 104 may prevent food from dropping off of the cooking tray 100, during manipulation of the cooking tray.

In advantageous embodiments, the mesh or grating 102 is such that it allows for air circulation through the cooking tray 100. The latter results in an improved baking process. The mesh or grating 102 may be provided with mesh or grating openings, whereby the surface area of an individual mesh or grating opening is between 2 x 2 mm² and 6 x 6 mm². The shape of the mesh or grating openings can be square or may have any other shape, such as for example rectangular. The orientation of the mesh or grating openings may be in any suitable direction. It is an advantage of embodiments according to the present invention that these prevent dropping of food through the mesh or grating openings due to the size of the openings, while still allowing air flow. The latter may advantageously be used as turning the food, which typically need to be done when preparing food on a barbeque, may imply that the food falls into pieces.

The base portion, and if present also upstanding portions, may comprise a mesh made by warp knitting, braiding or weaving or made with any other suitable technique. In particular embodiments, the mesh may be a woven mesh. One example, the present invention not being limited thereto, of producing the mesh may be using leno weaving. Leno weaving is a weaving process in which warp yarns are arranged in pairs. Two hardnesses may be required and two sets of warp, the ground yarns and the doup yarns may be used. The filing is shot straight across the fabric as in a plain weave, but the doup yarns are alternately moved in the right- and left-hand direction, crossing before each pick is inserted. The doup yarns are attached to a special harness called a doup harness that is manipulated to move them from one side of the ground yarns to the other. This weave gives firmness and strength to an open weave cloth, preventing slipping and displacements of warp and filling yarns. By way of example, the present invention not being limited thereto, the cooking tray may comprise a woven mesh whereby the thickness of the glass fibres used is between 0.3mm and 0.7mm. The density of the mesh or grating may be between 200g/m² and 1200 g/m².

In advantageous embodiments, the mesh or grating 102 of the cooking tray 100 may be coated with an anti-sticking material, such as for example a fluoropolymer or synthetic fluoropolymer. The anti-sticking material may be for example any of polytetrafluoroethylene (PTFE), fluorinated ethylene propylene (FEP) or perfluoroalkoxy (PFA), better known as Teflon® distributed by DuPont. The latter provides the advantage that the food does not stick to the cooking tray or that the degree of sticking is substantially reduced. As sticking of the food to the cooking tray 100 is reduced, the food can be more easily manipulated resulting in less burning of the food. The anti-sticking material may be applied to the whole mesh or grating 102 or to part thereof.

The cooking tray 100 furthermore provides the advantage of avoiding or reducing the amount of cleaning needed for the metal wire grill 20, as the food does not come into contact with the metal wire grill 20. It also provides the advantage that the food does not stick to the metal wire grill 20 during food preparation, e.g. baking or grilling. The cooking tray 100 can be cleaned easily e.g. by hand or in the dishwasher. Whereas the metal wire grill 20 in conventional barbequing without the use of a cooking tray typically may turn black by food rests burned at the metal wire grill20 , the latter is not the case when the cooking tray 100 is used. Furthermore, as the food is less or not in contact with the metal wire grill 20, preparation of the food can also be done in a more hygienic way.

It is an advantage of embodiments according to the present invention that the cooking tray 100 can be re-used at least a number of times. The latter therefore is environmental friendly.

The cooking tray 100 may be made in a plurality of colours, shapes and models, none of them being limiting for the present invention. The size of the cooking tray 100 may be smaller but close to the size of the metal wire grill of the barbeque. It is an advantage according to embodiments of the present invention that the cooking tray 100 can be easily given an appropriate size, e.g. by cutting with a knife or using scissors or in any other suitable way.

It is an advantage of embodiments according to the present invention that the cooking tray 100, even during use, is safer in use, e.g. burn-proof with respect to the user, as it made of a low-heat-conductive material, in contrast to metal cooking trays. In other words, a user may remove the cooking tray by picking it up, without the risk of burning during the manipulation.

FIG. 2 illustrates a cooking tray 100 according to an embodiment of the present invention positioned on a wire grill 20 of a barbeque system 10. The cooking tray 100 comprises a mesh or grating 102 with openings. The mesh or grating 102 is made of glass fibre and is, in the present example, a woven structure. Furthermore a PTFE coating is applied to the mesh, resulting in an anti-sticking effect of food to the cooking tray 100. As illustrated in FIG. 2, the mesh or grating openings of the cooking tray advantageously are smaller than the openings between the bars of the wire grill. The cooking tray 100 illustrated in FIG. 2 furthemore comprises the optional upstanding walls 104, which may prevent food from rolling or dropping off of the barbeque wire grill.

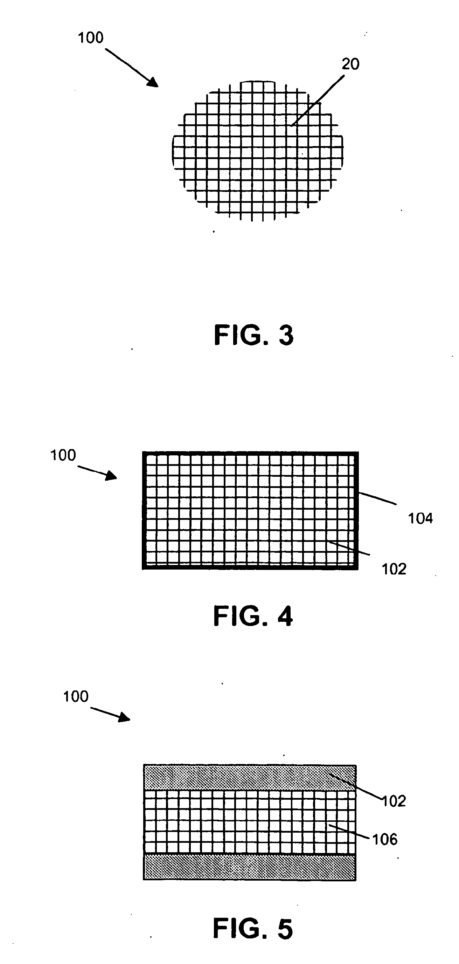

Alternative cooking trays are illustrated in FIG. 3 and FIG. 4. FIG. 3 illustrates a disc shaped cooking tray 100 having the same features as the cooking tray 100 described above, e.g. having a glass fibre based mesh 102. In this particular example, no upstanding walls are present. In FIG. 4 a similar cooking tray 100 as in FIG. 2 is shown, but wherein the orientation of the mesh openings is different.

In some embodiments according to the present invention, a cooking tray 100 comprising the same or similar features as in the above embodiments is described, but the cooking tray 100 furthermore has re-inforcement portions 106 in the base portion. An example thereof is illustrated in FIG. 5. Alternatively or in addition thereto, such reinforcement portions may be present at upstanding side walls of the cooking tray.

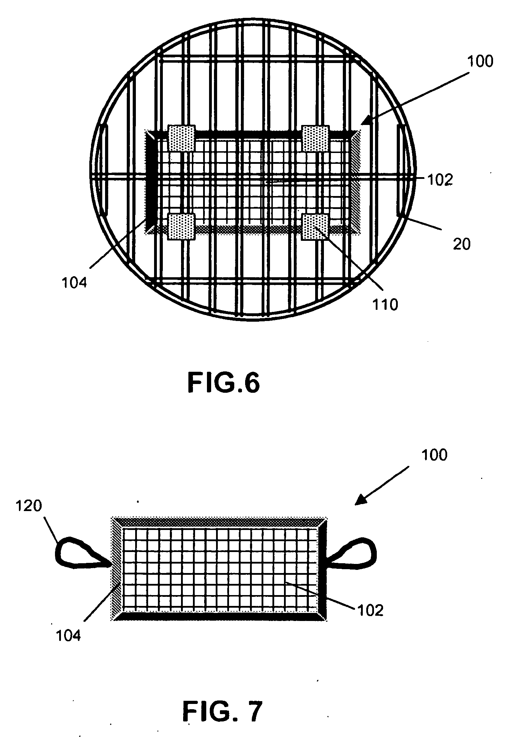

In some embodiments according to the present invention, a cooking tray 100 comprising the same or similar features as in the above embodiments is described, but the cooking tray 100 furthermore is adapted with manipulation means for manipulating the cooking tray, in the present embodiment being attaching/engaging the cooking tray to the wire grill using engagement means 110. The latter is illustrated by way of example in FIG. 6. The engagement means 110 may be for example, clipping means, clicking means or more generally any type of fixing means allowing the cooking tray to maintain a fixed position with respect to the wire grill. If variation on the wire grill exists depending on the type or model of barbeque system, the adaptation of the cooking tray may be specified for the type or model of barbeque system, e.g. in position where the engagement means 110 can be provided. The engagement means may be separate from the cooking tray or they may be fixed thereto. The engagement means are adapted so that they can, at one portion, be hooked, shifted, clipped or clicked or more generally fixed to the cooking tray and so that they can, at another portion be hooked, shifted clipped or clicked or more generally fixed to the wire grill. Alternatively the engagement means 110 may be integrated in the cooking tray 100 or in the wire grill 20 in a non-releasable manner and may be detachably engagement with the wire grill 20 or cooking tray 100 respectively. It is an advantage that the cooking tray can be fixed to the wire grill, thus preventing the cooking tray from shifting of the wire grill during manipulation of the wire grill, e.g. during change of height of the wire grill with respect to the heat source.

In some embodiments according to the present invention, a cooking tray comprising the same features and advantages as in the above embodiments is described, wherein the cooking tray 100 furthermore comprises manipulation means for assisting in the manipulation of the cooking tray 100 being handling means 120 for handling the cooking tray 100. Such handling means 120 may in one example comprise handles, which may e.g. be used for displacing the cooking tray. The latter is illustrated in FIG. 7. As the cooking tray may have the advantage of being low heat conductive, the handles may be used by the user without further heat protection. Alternatively or in addition thereto, the manipulation means 120 furthermore may comprise handling features that can co-operate with a separate handling device, e.g. a two legged fork that can be engaged to the cooking tray e.g. using two or more engagement openings in the cooking tray. The additional handling device may then allow appropriate handling of the cooking tray. Another such manipulation means may be one large single handle, e.g. extending from one side of the cooking tray to the other side of the cooking tray, such that a basket is formed.

In a second aspect, the present invention relates to the use of a cooking tray as described in the first aspect for preparing food on a barbeque. Although in barbeque applications the maximum temperature, the temperature profile as well as the occurrence of flames is less or not controllable, it has surprisingly been found that cooking trays made of glass fibres, e.g. as described above in the first aspect, can be used for barbeque applications. Using the cooking tray for cooking, and more particularly baking or grilling, food on a barbeque may comprise positioning the cooking tray on top of a barbeque wire grill, whereby the cooking tray may already be filled or may be filled once the cooking tray is on the barbeque wire grill and preparing the food. In this way the food can be prepared. The use furthermore may comprise fixing the cooking tray to the wire grill using engagement means, handling the cooking tray using manipulation means such as e.g. handles or by using a separate handling device that can co-operate with handling features on the cooking tray, etc. Furthermore, using the cooking tray furthermore may comprise cleaning the cooking tray, e.g. in a dishwasher, and/or re-using the cooking tray.

In a third aspect, the present invention also relates to a method for barbequing. The method may comprise providing a heat source in a barbeque system. The latter may for example be a flame-based heat source, such as for example a gas based heat source or a charcoal heat source. The method comprises providing a wire grill above the heat source and placing a cooking tray as described above in the first aspect on the wire grill. The food to be prepared may already be placed in the cooking tray before placing the cooking tray on the wire grill or may be placed in the cooking tray after it has been placed on the wire grill. In this way the food can be prepared. Other steps known in the process of barbequing also may be applied.

In another aspect, the present invention also relates to engagement means for engaging or attaching the cooking tray to the wire grill. The engagement means may be adapted to cooperate with the wire grill as well as be adapted to cooperate with the cooking tray. The engagement means may be a clipping means, clicking means or more generally any type of fixing means allowing the cooking tray to maintain on the wire grill during shifting or tilting of the wire grill.

It is to be understood that although preferred embodiments, specific constructions and configurations, as well as materials, have been discussed herein for devices according to the present invention, various changes or modifications in form and detail may be made without departing from the scope of this invention as defined by the appended claims. Functionality may be added or deleted from the block diagrams and operations may be interchanged among functional blocks. Steps may be added or deleted to methods described within the scope of the present invention.

## Claims

1. A barbecue system (10) comprising a heat source, a cooking tray (100) for preparing food and a wire grill (20 and the cooking tray (100) having at least a base portion comprising a glass fibre based mesh or grating (102) for supporting food to be prepared on said barbecue system (10), wherein said cooking tray is positioned on said wire grill.

2. The barbecue system according to claim 1, wherein the glass fibre based mesh or grating (102) is coated with an anti-sticking material.

3. The barbecue system according to claim 2, wherein the anti-sticking material is a fluoropolymer.

4. The barbecue system according to any one of claims 1 to 3, wherein said cooking tray (100) is adapted for being positioned on said wire grill (20) of said barbeque (10) when in operation.

5. The barbecue system according to any one of claims 1 to 4, wherein said cooking tray (100) is a flat cooking tray; and/or the cooking tray (100) comprising upstanding side walls (104) attached to the base portion to prevent food from rolling or dropping off of the cooking tray (100); and/or the cooking tray (100) comprising furthermore manipulation means (110, 120) for assisting in the manipulation of the cooking tray.

6. The barbecue system according to claim 5, wherein the manipulation means (110, 120) comprises handles (120) for displacing the cooking tray (100).

7. The barbecue system according to claim 5 or 6, wherein the manipulation means (120) comprises engagement means (110) for engaging the cooking tray to the wire grill.

8. The barbecue system according to any one of the previous claims, wherein the mesh or grating (102) is a mesh made by warp knitting, braiding or weaving.

9. The barbecue system according to claim 8, wherein the mesh (102) is a woven mesh, or wherein the woven mesh is made by leno weaving.

10. The barbecue system according to any one of the previous claims, wherein the mesh (102) has mesh openings allowing air circulation.

11. The barbecue system according to claim 9, wherein the mesh openings have a surface between 2 x 2 mm² and 6 x 6 mm², and/or wherein the density of the grating or mesh (102) is between 200g/m² and 1200g/m^{z}

12. Use of a cooking tray (100) for preparing food on a barbecue system comprising a heat source and a wire grill, the cooking tray (100) having at least a base portion comprising a glass fibre based grating or mesh (102) for supporting food to be prepared on said barbecue system, wherein said cooking tray is positioned on said wire grill of said barbecue when In operation.

13. The use according to claim 12, wherein said cooking tray (100) is adapted for being positioned on said wire grill of said barbecue when in operation.

14. A method for preparing food using a barbecue system (10), the method comprising
- providing a heat source in the barbecue system (10),
- providing a wire grill (20) above the heat source,
- providing food on a cooking tray (100) for preparing the food and positioning the cooking tray (100) on the wire grill (20), the cooking tray (100) having a base portion comprising a glass fibre based mesh.

15. A cooking tray (100) for preparing food on a barbecue system (10) comprising a heat source and a wire grill (20), the cooking tray (100) adapted for being positioned on said wire grill (20) of said barbecue (10) when in operation and the cooking tray (100) have at least a base portion comprising a glass fibre based mesh or grating (102) for supporting food to be prepared on said barbecue system (10), wherein the cooking tray (100) comprises furthermore manipulation means (110, 120) for assisting in the manipulation of the cooking tray, and wherein the manipulation means (120) comprises engagement means (110) for engaging the cooking tray to the wire grill.

## Patentansprüche

1. Grillsystem (10), umfassend eine Wärmequelle, eine Kochschale (100) zum Zubereiten eines Nahrungsmittels und einen Drahtgrill (20), wobei die Kochschale (100) mindestens einen Basisabschnitt aufweist, der ein Geflecht oder Gitter (102) auf Glasfaserbasis umfasst, um Nahrungsmittel, das zuzubereiten ist, auf dem Grillsystem (10) zu halten, wobei die Kochschale auf dem Drahtgrill positioniert ist.

2. Grillsystem nach Anspruch 1, wobei das Geflecht oder Gitter (102) auf Glasfaserbasis mit einem Antihaftmaterial beschichtet ist.

3. Grillsystem nach Anspruch 2, wobei das Antihaftmaterial ein Fluorpolymer ist.

4. Grillsystem nach einem der Ansprüche 1 bis 3, wobei die Koahschale (100) dazu ausgebildet ist, in Betrieb auf dem Drahtgrill (20) des Grills (10) positioniert zu werden.

5. Grillsystem nach einem der Ansprüche 1 bis 4, wobei die Kochschale (100) eine flache Kochschale ist; und/oder die Kochschale (100) hoch stehende Seitenwände (104) umfasst, die an dem Basisabschnitt befestigt sind, um ein Herabrollen oder Herabfallen von Nahrungsmitteln von der Kochschale (100) zu vermeiden; und/oder die Kochschale (100) des Weiteren Handhabungsmittel (110, 120) umfasst, die die Handhabung der Kochschale erleichtern.

6. Grillsystem nach Anspruch 5, wobei die Handhabungsmittel (110, 120) Handgriffe (120) zum Verschieben der Kochschale (100) umfassen.

7. Grillsystem nach Anspruch 5 oder 6, wobei die Handhabungsmittel (120) Eingriffsmittel (110) für den Eingriff der Kochschale mit dem Drahtgrill umfassen.

8. Grillsystem nach einem der vorangehenden Ansprüche, wobei das Geflecht oder Gitter (102) ein Geflecht ist, das durch Kettenwirkerei, Flechten oder Weben hergestellt ist.

9. Grillsystem nach Anspruch 8, wobei das Geflecht (102) ein gewebtes Geflecht ist oder wobei das gewebte Geflecht durch Dreherweben hergestellt ist.

10. Grillsystem nach einem der vorangehenden Ansprüche, wobei das Geflecht (102) Maschenöffnungen aufweist, die eine Luftzirkulation ermöglichen.

11. Grillsystem nach Anspruch 9, wobei die Maschenöffnungen eine Oberfläche zwischen 2 x 2 mm² und 6 x 6 mm² haben und/oder wobei die Dichte des Gitters oder Geflechts (102) zwischen 200 g/m² und 1200 g/m² liegt.

12. Verwendung einer Kochschale (100) zum Zubereiten eines Nahrungsmittels auf einem Grillsystem, das eine Wärmequelle und einen Drahtgrill umfasst, wobei die Kochschale (100) mindestens einen Basisabschnitt aufweist, der ein Geflecht oder Gitter (102) auf Glasfaserbasis umfasst, um Nahrungsmittel, das zuzubereiten ist, auf dem Grillsystem zu halten, wobei die Kochschale in Betrieb auf dem Drahtgrill positioniert ist.

13. Verwendung nach Anspruch 12, wobei die Kochschale (100) dazu ausgebildet ist, in Betrieb auf dem Drahtgrill des Grills positioniert zu werden.

14. Verfahren zum Zubereiten eines Nahrungsmittels unten Verwendung eines Grillsystems (10), wobei das Verfahren umfasst
- Bereitstellen einer Wärmequelle in dem Grillsystem (10),
- Bereitstellen eines Drahtgrills (20) über der Wärmequelle,
- Bereitstellen eines Nahrungsmittels auf einer Kochschale (100) zum Zubereiten des Nahrungsmittels und Positionieren der Kochschale (100) auf dem Drahtgrill (20), wobei die Kochschale (100) einen Basisabschnitt aufweist, der ein Geflecht auf Glasfaserbasis umfasst.

15. Kochschale (100) zum Zubereiten eines Nahrungsmittels auf einem Grillsystem (10), umfassend eine Wärmequelle und einen Drahtgrill (20), wobei die Kochschale (100) dazu ausgebildet ist, in Betrieb auf dem Drahtgrill (20) des Grills (10) positioniert zu werden, und die Kochschale (100) mindestens einen Basisabschnitt aufweist, der ein Geflecht oder Gitter (102) auf Glasfaserbasis umfasst, um Nahrungsmittel, das zuzubereiten ist, auf dem Grillsystem (10) zu halten, wobei die Kochschale (100) des Weiteren Handhabungsmittel (110, 120) umfasst, die die Handhabung der Kochschale erleichtern, und wobei die Handhabungsmittel (120) Eingriffsmittel (110) für den Eingriff der Kochschale mit dem Drahtgrill umfassen.

## Revendications

1. Système de barbecue (10) comprenant une source de chaleur, un plateau de cuisson (100) pour préparer de la nourriture et une grille métallique (20) et le plateau de cuisson (100) ayant au moins une partie de base comprenant un maillage ou un treillis à base de fibres de verre (102) pour supporter la nourriture à préparer sur ledit système de barbecue (10), dans lequel ledit plateau de cuisson est positionné sur ladite grille métallique.

2. Système de barbecue selon la revendication 1, dans lequel le maillage ou le treillis à base de fibres de verre (102) est recouvert d'une matière anti-adhérente.

3. Système de barbecue selon la revendication 2, dans lequel la matière anti-adhérente est un fluoropolymère.

4. Système de barbecue selon l'une quelconque des revendications 1 à 3, dans lequel ledit plateau de cuisson (100) est conçu pour être positionné sur ladite grille métallique (20) dudit barbecue (10) en fonctionnement.

5. système de barbecue selon l'une quelconque des revendications 1 à 4, dans lequel ledit plateau de cuisson (100) est un plateau de cuisson plat ; et/ou le plateau de cuisson (100) comprenant des parois latérales dressées (104) fixées à la partie de base pour empêcher la nourriture de rouler ou de tomber du plateau de cuisson (100) ; et/ou le plateau de cuisson (100) comprenant en outre un moyen de manipulation (110, 120) pour aider à la manipulation du plateau de cuisson.

6. système de barbecue selon la revendication 5, dans lequel le moyen de manipulation (110, 120) comprend des poignées (120) pour déplacer le plateau de cuisson (100).

7. Système de barbecue selon la revendication 5 ou 6, dans lequel le moyen de manipulation (120) comprend un moyen de mise en prise (110) pour mettre en prise le plateau de cuisson avec la grille métallique.

8. Système de barbecue selon l'une quelconque des revendications précédentes, dans lequel le maillage ou le treillis (102) est un maillage fait par tricotage chaîne, tressage ou tissage.

9. Système de barbecue selon la revendication 8, dans lequel le maillage (102) est une maille tissée, ou dans lequel la maille tissée est faite par un tissage gaze.

10. système de barbecue selon l'une quelconque des revendications précédentes, dans lequel le maillage (102) a des ouvertures de maille permettant la circulation d'air.

11. Système de barbecue selon la revendication 9, dans lequel les ouvertures de maille ont une surface entre 2 × 2 mm² et 6 × 6 mm², et/ou dans lequel la densité du treillis ou du maillage (102) est comprise entre 200 g/m² et 1 200 g/m².

12. Utilisation d'un plateau de cuisson (100) pour préparer de la nourriture sur un système de barbecue comprenant une source de chaleur et une grille métallique, le plateau de cuisson (100) ayant au moins une partie de base comprenant un treillis ou un maillage à base de fibres de verre (102) pour supporter la nourriture à préparer sur ledit système de barbecue, dans laquelle ledit plateau de cuisson est positionné sur ladite grille métallique dudit barbecue en fonctionnement.

13. Utilisation selon la revendication 12, dans laquelle ledit plateau de cuisson (100) est conçu pour être positionné sur ladite grille métallique dudit barbecue en fonctionnement.

14. Procédé pour préparer de la nourriture en utilisant un système de barbecue (10), le procédé comprenant :
- la fourniture d'une source de chaleur dans le système de barbecue (10),
- la fourniture d'une grille métallique (20) au-dessus de la source de chaleur,
- la fourniture de nourriture sur un plateau de cuisson (100) pour préparer la nourriture et le positionnement du plateau de cuisson (100) sur la grille métallique (20), le plateau de cuisson (100) ayant une partie de base comprenant un maillage à base de fibres de verre.

15. Plateau de cuisson (100) pour préparer de la nourriture sur un système de barbecue (10) comprenant une source de chaleur et une grille métallique (20), le plateau de cuisson (100) étant conçu pour être positionné sur ladite grille métallique (20) dudit barbecue (10) en fonctionnement et le plateau de cuisson (100) a au moins une partie de base comprenant un maillage ou un treillis à base de fibres de verre (102) pour supporter la nourriture à préparer sur ledit système de barbecue (10), dans lequel le plateau de cuisson (100) comprend en outre un moyen de manipulation (110, 120) pour aider à la manipulation du plateau de cuisson, et dans lequel le moyen de manipulation (120) comprend un moyen de mise en prise (110) pour mettre en prise le plateau de cuisson avec la grille métallique.
